# EUROPEAN PATENT APPLICATION

(11) **EP 4 534 198 A1**
(43) Date of publication of application: **09.04.2025**
(21) Application number: 23815906.5
(22) Date of filing: 24.05.2023
(51) Int. Cl.: B01J 23/63, B01D 53/94, F01N 3/10, F01N 3/28

(54) **EXHAUST GAS PURIFICATION CATALYST**

(30) Priority: 30.05.2022 JP 2022087792
(71) Applicant: Mitsui Mining & Smelting Co., Ltd., Shinagawa-ku Tokyo 141-8584 (JP)
(72) Inventor: IMAI, Tsubasa, Ageo-shi Saitama 362-0025 (JP); MORIYA, Toshiharu, Ageo-shi Saitama 362-0025 (JP); TAKEUCHI, Ryo, Ageo-shi Saitama 362-0025 (JP); ASAKOSHI, Toshiki, Ageo-shi Saitama 362-0025 (JP)
(74) Representative: Novagraaf Technologies
(86) International application number: PCT/JP2023/019393
(87) International publication number: WO 2023/234147

(57) **Abstract**

To achieve an object of providing an exhaust gas purification catalyst with improved exhaust gas purification performance, the present invention provides an exhaust gas purification catalyst (1), including a substrate (10) and a first catalyst layer (20) provided on the substrate (10), wherein the first catalyst layer (20) contains Rh, Ce, and Y, and wherein a value of "a"/"b", wherein "a" represents a mole percentage of a molar amount of Ce in the first catalyst layer (20) based on a total molar amount of all metal elements in the first catalyst layer (20), and "b" represents a mole percentage of a molar amount of Y in the first catalyst layer (20) based on the total molar amount of all metal elements in the first catalyst layer (20), is 0.010 or more and 0.400 or less.

## Description

### FIELD OF THE INVENTION

The present invention relates to an exhaust gas purification catalyst.

### BACKGROUND ART

Exhaust gas emitted from an internal combustion engine of an automobile, a motorcycle or the like contains harmful components such as hydrocarbons (HC), carbon monoxide (CO), and nitrogen oxide (NOx). A three-way catalyst is used to purify and detoxify those harmful components. A catalyst containing a noble metal element such as Pt, Pd, or Rh is used as a three-way catalyst. Pt and Pd are mainly involved in oxidative purification of HC and CO, and Rh is mainly involved in reductive purification of NOx.

Patent Document 1 discloses an exhaust gas purification catalyst including: a substrate; and a catalyst layer formed on the substrate, wherein the catalyst layer contains: a Rh-supporting ZrLaY complex oxide; a Rh-supporting ZrLa-activated alumina; and a Rh-supporting ZrCe-based complex oxide, wherein the amount of the Rh supported in the Rh-supporting ZrLa-activated alumina is greater than the amount of the Rh supported in the Rh-supporting ZrLaY complex oxide, and wherein the amount of the Rh supported in the Rh-supporting ZrCe-based complex oxide is greater than the amount of the Rh supported in the Rh-supporting ZrLa-activated alumina. The Rh-supporting ZrLaY complex oxide is formed by supporting Rh on a ZrLaY complex oxide containing: ZrO₂ as a main component; 2 to 10% by mass of La₂O₃; and 2 to 20% by mass of Y₂O₃. The Rh-supporting ZrLa-activated alumina is formed by supporting a ZrLa complex oxide containing Zr and La on an activated alumina, and by supporting Rh on the activated alumina. The Rh-supporting ZrCe-based complex oxide is formed by supporting Rh on a ZrCe-based complex oxide containing Zr and Ce. The ZrLa complex oxide does not contain Y and differs from the ZrLaY complex oxide.

According to the exhaust gas purification catalyst disclosed in Patent Document 1, it is possible to suppress deactivation of Rh that is caused by solid solution of part of Rh with alumina due to exposure to high temperature exhaust gas, thereby resulting in improvement in exhaust gas purification performance.

In the Examples in Patent Document 1, an upper catalyst layer containing a Rh-supporting ZrCeNd complex oxide, a Rh-supporting ZrLaY complex oxide, a La alumina, and optionally a Rh-supporting ZrLa alumina is formed on a lower catalyst layer. In the Examples in Patent Document 1, the value of "a"/"b", wherein "a" represents the mole percentage of the molar amount of Ce in the upper catalyst layer based on the total molar amount of all metal elements in the upper catalyst layer, and "b" represents the mole percentage of the molar amount of Y in the upper catalyst layer based on the total molar amount of all metal elements in the upper catalyst layer, is calculated as about 1.6 (Example 5A), 3.3 (Example 5B), about 3.9 (Examples 4A and 4B), about 19.7 (Examples 11A, 11B, 12A and 12B), or about 2.0 (Examples 13A, 13B, 14A and 14B).

### CITATION LIST

### PATENT DOCUMENT

Patent Document 1: JP 2015-073961 A

### SUMMARY OF THE INVENTION

### TECHNICAL PROBLEM

There is a demand for improvement in exhaust gas purification performance.

Accordingly, an object of the present invention is to provide an exhaust gas purification catalyst with improved exhaust gas purification performance.

### SOLUTION TO PROBLEM

The present invention provides the following exhaust gas purification catalysts.
[1] An exhaust gas purification catalyst, including a substrate and a first catalyst layer provided on the substrate,
   wherein the first catalyst layer contains Rh, Ce, and Y, and
   wherein a value of "a"/"b", wherein "a" represents a mole percentage of a molar amount of Ce in the first catalyst layer based on a total molar amount of all metal elements in the first catalyst layer, and "b" represents a mole percentage of a molar amount of Y in the first catalyst layer based on the total molar amount of all metal elements in the first catalyst layer, is 0.010 or more and 0.400 or less.
[2] The exhaust gas purification catalyst according to [1], wherein the first catalyst layer further contains Zr.
[3] The exhaust gas purification catalyst according to [1] or [2], wherein "b" is 11 mol% or more.
[4] The exhaust gas purification catalyst according to [1] or [2], wherein "b" is 15 mol% or more.
[5] The exhaust gas purification catalyst according to [1] or [2], wherein "b" is 19 mol% or more.
[6] The exhaust gas purification catalyst according to any one of [1] to [5], wherein a value of "c"/"b", wherein "c" represents a mole percentage of a molar amount of Rh in the first catalyst layer based on the total molar amount of all metal elements in the first catalyst layer, is 0.0010 or more and 0.0270 or less.
[7] The exhaust gas purification catalyst according to any one of [1] to [6], further including a second catalyst layer provided on the substrate.
[8] The exhaust gas purification catalyst according to [7], wherein the first catalyst layer is provided on an upside of the second catalyst layer.
[9] The exhaust gas purification catalyst according to [7] or [8], wherein the second catalyst layer contains Pd.

### ADVANTAGEOUS EFFECTS OF INVENTION

According to the present invention, there is provided an exhaust gas purification catalyst with improved exhaust gas purification performance.

### BRIEF DESCRIPTION OF THE DRAWINGS

Figure 1 is a partial end view showing a state in which an exhaust gas purification catalyst according to an embodiment of the present invention is disposed in an exhaust gas path of an internal combustion engine.
Figure 2 is an end view taken along line A-A of Figure 1.
Figure 3 is an enlarged view of a region denoted by the reference sign R in Figure 2.
Figure 4 is an end view taken along line B-B of Figure 1.

### DETAILED DESCRIPTION OF THE INVENTION

### <<Description of terms>>

The terms used herein will be described below.

### <Rare earth element>

Examples of a rare earth element include Ce, Y, Pr, Sc, La, Nd, Sm, Eu, Gd, Tb, Dy, Ho, Er, Tm, Yb, Lu, and the like. In the present specification, a rare earth element may be represented by "Ln".

### <Oxide>

The oxide of Al means Al₂O₃, the oxide of Si means SiO₂, the oxide of B means B₂O₃, the oxide of Zr means ZrO₂, the oxide of Cr means Cr₂O₃, the oxide of Mg means MgO, the oxide of Ca means CaO, the oxide of Sr means SrO, the oxide of Ba means BaO, the oxide of Fe means Fe₃O₄, the oxide of Mn means Mn₃O₄, and the oxide of Ni means NiO. The oxide of a rare earth element means a sesquioxide (Ln₂O₃) except the oxide of Ce, the oxide of Pr, and the oxide of Tb. The oxide of Ce means CeO₂, the oxide of Pr means Pr₆O₁₁, and the oxide of Tb means Tb₄O₇.

### <Ce-based oxide>

A Ce-based oxide means an oxide containing Ce. An oxide containing Ce and Y, wherein the content of Ce in terms of oxide is equal to or greater than the content of Y in terms of oxide, falls into the category of the Ce-based oxide, whereas an oxide containing Ce and Y, wherein the content of Ce in terms of oxide is less than the content of Y in terms of oxide, falls into the category of the Y-based oxide described below. An oxide containing Ce and Al, wherein the content of Ce in terms of oxide is equal to or greater than the content of Al in terms of oxide, falls into the category of the Ce-based oxide, whereas an oxide containing Ce and Al, wherein the content of Ce in terms of oxide is less than the content of Al in terms of oxide, falls into the category of the Al-based oxide described below.

The Ce-based oxide is, for example, in the form of a particle.

The Ce-based oxide is used as a carrier for a catalytically-active component. From the viewpoint of improving the supportability for a catalytically-active component, the Ce-based oxide is preferably porous.

The Ce-based oxide has an ability to absorb oxygen when the oxygen concentration in exhaust gas is high and release oxygen when the oxygen concentration in exhaust gas is low (in the present specification, the ability may be referred to as the "oxygen storage capacity"), and mitigates fluctuations in the oxygen concentration in exhaust gas and expands the operating window of a catalytically active component. Therefore, when the Ce-based oxide is used, the exhaust gas purification performance of an exhaust gas purification catalyst is improved.

The Ce-based oxide may or may not contain one or more types of elements other than Ce and O.

The one or more types of elements other than Ce and O can be selected from, for example, a rare earth element (Ln) other than Ce, an alkaline earth metal element (for example, Mg, Ca, Sr, Ba or the like), Fe, Mn, Ni, Zr, Al, and the like.

The Ce-based oxide can contain, for example, at least one selected from La, Nd, Y, Gd, and Sm as Ln other than Ce. This makes it possible to improve the heat resistance of the Ce-based oxide. From the viewpoint of improving the heat resistance of the Ce-based oxide, Ln other than Ce is preferably selected from La, Nd, and Y.

The Ce-based oxide can contain, for example, Pr as Ln other than Ce. This makes it possible to improve the oxygen storage capacity of the Ce-based oxide.

Examples of the Ce-based oxide include ceria (an oxide composed of Ce and O), an oxide obtained by modifying the surface of ceria with the element other than Ce and O, and an oxide obtained by dissolving the element other than Ce and O in ceria.

In the Ce-based oxide, the element other than Ce and O may form a solid solution phase with Ce and O, or may form a single phase (for example, an oxide phase of the element other than Ce and O) which is a crystalline phase or an amorphous phase, or may form both of the solid solution phase and the single phase.

In an embodiment of the Ce-based oxide (hereinafter referred to as the "first Ce-based oxide"), the content of Ce in terms of oxide is preferably more than 90% by mass or more, more preferably 95% by mass or more, and still more preferably 99% by mass or more, based on the mass of the first Ce-based oxide. The upper limit is 100% by mass.

In a case where the first Ce-based oxide contains the element other than Ce and O, the content of the element other than Ce and O in terms of oxide in the first Ce-based oxide is preferably more than 0% by mass and less than 10% by mass, more preferably more than 0% by mass and 5% by mass or less, and still more preferably more than 0% by mass and 1% by mass or less, based on the mass of the first Ce-based oxide, from the viewpoint of improving the oxygen storage capacity of the first Ce-based oxide. The content of the element other than Ce and O in terms of oxide may be, for example, 0.1% by mass or more, 0.2% by mass or more, or 0.3% by mass or more. Each of these lower limits may be combined with any of the above-described upper limits. The expression "the content of the element other than Ce and O in terms of oxide" means, in a case where the first Ce-based oxide contains one type of element other than Ce and O, the content of the one type of element in terms of oxide, and in a case where the first Ce-based oxide contains two or more types of elements other than Ce and O, the total content of the two or more types of elements in terms of oxide.

In another embodiment of the Ce-based oxide (hereinafter referred to as the "second Ce-based oxide"), the content of Ce in terms of oxide is preferably 1% by mass or more and 90% by mass or less, more preferably 2% by mass or more and 50% by mass or less, and still more preferably 3% by mass or more and 45% by mass or less, based on the mass of the second Ce-based oxide.

In the second Ce-based oxide, the content of the element other than Ce and O in terms of oxide is preferably 10% by mass or more and 99% by mass or less, more preferably 50% by mass or more and 98% by mass or less, and still more preferably 55% by mass or more and 97% by mass or less, based on the mass of the second Ce-based oxide, from the viewpoint of improving the heat resistance of the second Ce-based oxide. The expression "the content of the element other than Ce and O in terms of oxide" means, in a case where the second Ce-based oxide contains one type of element other than Ce and O, the content of the one type of element in terms of oxide, and in a case where the second Ce-based oxide contains two or more types of elements other than Ce and O, the total content of the two or more types of elements in terms of oxide.

### <Ce-Zr-based oxide>

A Ce-Zr-based oxide is one type of the Ce-based oxide (preferably one type of the second Ce-based oxide) and means a complex oxide containing Ce and Zr. An oxide containing Ce, Y and Zr, wherein the content of Ce in terms of oxide is equal to or greater than the content of Y in terms of oxide, falls into the category of the Ce-Zr-based oxide, whereas an oxide containing Ce, Y and Zr, wherein the content of Ce in terms of oxide is less than the content of Y in terms of oxide, falls into the category of the Y-Zr-based oxide described below.

The Ce-Zr-based oxide is, for example, in the form of a particle.

The Ce-Zr-based oxide is used as a carrier for a catalytically-active component. From the viewpoint of improving the supportability for a catalytically-active component, the Ce-Zr-based oxide is preferably porous.

In the Ce-Zr-based oxide, Ce may form a solid solution phase with Zr and O, or may form a single phase (for example, a single phase of CeO₂) which is a crystalline phase or an amorphous phase, or may form both of the solid solution phase and the single phase. It is preferable that at least part of Ce forms the solid solution phase.

In the Ce-Zr-based oxide, Zr may form a solid solution phase with Ce and O, or may form a single phase (for example, a single phase of ZrO₂) which is a crystalline phase or an amorphous phase, or may form both of the solid solution phase and the single phase. It is preferable that at least part of Zr forms the solid solution phase.

The Ce-Zr-based oxide has the oxygen storage capacity, and mitigates fluctuations in the oxygen concentration in exhaust gas and expands the operating window of a catalytically active component. Therefore, when the Ce-Zr-based oxide is used, the exhaust gas purification performance of an exhaust gas purification catalyst is improved. Ce mainly contributes to improvement in the oxygen storage capacity of the Ce-Zr-based oxide, and Zr mainly contributes to improvement in the heat resistance of the Ce-Zr-based oxide.

In the Ce-Zr-based oxide, the total of the content of Ce in terms of oxide and the content of Zr in terms of oxide is preferably 60% by mass or more, more preferably 70% by mass or more, and still more preferably 80% by mass or more, based on the mass of the Ce-Zr-based oxide, from the viewpoint of improving the heat resistance and oxygen storage capacity of the Ce-Zr-based oxide. The upper limit is 100% by mass.

In the Ce-Zr-based oxide, the content of Ce in terms of oxide is preferably 5% by mass or more and 90% by mass or less, more preferably 7% by mass or more and 60% by mass or less, and still more preferably 10% by mass or more and 50% by mass or less, based on the mass of the Ce-Zr-based oxide, from the viewpoint of improving the oxygen storage capacity of the Ce-Zr-based oxide.

In the Ce-Zr-based oxide, the content of Zr in terms of oxide is preferably 10% by mass or more and 95% by mass or less, more preferably 40% by mass or more and 95% by mass or less, and still more preferably 50% by mass or more and 90% by mass or less, based on the mass of the Ce-Zr-based oxide, from the viewpoint of improving the heat resistance of the Ce-Zr-based oxide.

The Ce-Zr-based oxide may or may not contain one or more types of elements other than Ce, Zr, and O.

The one or more types of elements other than Ce, Zr, and O can be selected from, for example, a rare earth element (Ln) other than Ce, an alkaline earth metal element (for example, Mg, Ca, Sr, Ba, or the like), Fe, Mn, Ni, Al, and the like.

The Ce-Zr-based oxide can contain, for example, at least one selected from La, Nd, Y, Gd, and Sm as Ln other than Ce. This makes it possible to improve the heat resistance of the Ce-Zr-based oxide. From the viewpoint of improving the heat resistance of the Ce-Zr-based oxide, Ln other than Ce is preferably selected from La, Nd, and Y.

The Ce-Zr-based oxide can contain, for example, Pr as Ln other than Ce. This makes it possible to improve the oxygen storage capacity of the Ce-Zr-based oxide.

In a case where the Ce-Zr-based oxide contains Ln other than Ce, Ln other than Ce may form a solid solution phase with Zr and/or Ce as well as O, or may form a single phase (for example, a single phase of an oxide of Ln other than Ce) which is a crystalline phase or an amorphous phase, or may form both of the solid solution phase and the single phase. It is preferable that at least part of Ln other than Ce forms the solid solution phase.

In a case where the Ce-Zr-based oxide contains Ln other than Ce, the content of Ln other than Ce in terms of oxide in the Ce-Zr-based oxide is preferably 1% by mass or more and 40% by mass or less, more preferably 3% by mass or more and 30% by mass or less, and still more preferably 5% by mass or more and 20% by mass or less, based on the mass of the Ce-Zr-based oxide, from the viewpoint of improving the heat resistance of the Ce-Zr-based oxide. The expression "the content of Ln other than Ce in terms of oxide" means, in a case where the Ce-Zr-based oxide contains one type of Ln other than Ce, the content of the one type of Ln in terms of oxide, and in a case where the Ce-Zr-based oxide contains two or more types of Ln other than Ce, the total content of the two or more types of Ln in terms of oxide.

### <Y-based oxide>

A Y-based oxide means an oxide containing Y. An oxide containing Y and Al, wherein the content of Y in terms of oxide is equal to or greater than the content of Al in terms of oxide, falls into the category of the Y-based oxide, whereas an oxide containing Y and Al, wherein the content of Y in terms of oxide is less than the content of Al in terms of oxide, falls into the category of the Al-based oxide described below.

The Y-based oxide is, for example, in the form of a particle.

The Y-based oxide is used as a carrier for a catalytically-active component. From the viewpoint of improving the supportability for a catalytically-active component, the Y-based oxide is preferably porous.

The Y-based oxide may or may not contain one or more types of elements other than Y and O.

The one or more types of elements other than Y and O can be selected from, for example, a rare earth element (Ln) other than Y, an alkaline earth metal element (for example, Mg, Ca, Sr, Ba, or the like), Fe, Mn, Ni, Zr, Al, and the like.

The Y-based oxide can contain, for example, at least one selected from La, Nd, Gd, and Sm as Ln other than Y. This makes it possible to improve the heat resistance of the Y-based oxide. From the viewpoint of improving the heat resistance of the Y-based oxide, Ln other than Y is preferably selected from La and Nd.

The Y-based oxide can contain, for example, Ce as Ln other than Y. The Y-based oxide containing Ce has the oxygen storage capacity, thereby mitigating fluctuations in the oxygen concentration in exhaust gas and expanding the operating window of a catalytically active component. Therefore, when the Y-based oxide containing Ce is used, the exhaust gas purification performance of an exhaust gas purification catalyst is improved.

The Y-based oxide containing Ce may contain, for example, Pr as Ln other than Y and Ce. This makes it possible to improve the oxygen storage capacity of the Y-based oxide containing Ce.

Examples of the Y-based oxide include yttria (an oxide composed of Y and O), an oxide obtained by modifying the surface of yttria with the element other than Y and O, and an oxide obtained by dissolving the element other than Y and O in yttria.

In the Y-based oxide, the element other than Y and O may form a solid solution phase with Y and O, or may form a single phase (for example, an oxide phase of the element other than Y and O) which is a crystalline phase or an amorphous phase, or may form both of the solid solution phase and the single phase.

In an embodiment of the Y-based oxide (hereinafter referred to as the "first Y-based oxide"), the content of Y in terms of oxide is preferably more than 90% by mass, more preferably 95% by mass or more, and still more preferably 99% by mass or more, based on the mass of the first Y-based oxide. The upper limit is 100% by mass.

In a case where the first Y-based oxide contains the element other than Y and O, the content of the element other than Y and O in terms of oxide in the first Y-based oxide is preferably more than 0% by mass and less than 10% by mass, more preferably more than 0% by mass and 5% by mass or less, and still more preferably more than 0% by mass and 1% by mass or less, based on the mass of the first Y-based oxide, from the viewpoint of effectively exerting the performance of Y described below. The content of the element other than Y and O in terms of oxide may be, for example, 0.1% by mass or more, 0.2% by mass or more, or 0.3% by mass or more. Each of these lower limits may be combined with any of the above-described upper limits. The expression "the content of the element other than Y and O in terms of oxide" means, in a case where the first Y-based oxide contains one type of element other than Y and O, the content of the one type of element in terms of oxide, and in a case where the first Y-based oxide contains two or more types of elements other than Y and O, the total content of the two or more types of elements in terms of oxide.

In another embodiment of the Y-based oxide (hereinafter referred to as the "second Y-based oxide"), the content of Y in terms of oxide is preferably 1% by mass or more and 90% by mass or less, more preferably 2% by mass or more and 50% by mass or less, and still more preferably 3% by mass or more and 45% by mass or less, based on the mass of the second Y-based oxide.

In the second Y-based oxide, the content of the element other than Y and O in terms of oxide is preferably 10% by mass or more and 99% by mass or less, more preferably 50% by mass or more and 98% by mass or less, and still more preferably 55% by mass or more and 97% by mass or less, based on the mass of the second Y-based oxide, from the viewpoint of improving the heat resistance of the second Y-based oxide. The expression "the content of the element other than Y and O in terms of oxide" means, in a case where the second Y-based oxide contains one type of element other than Y and O, the content of the one type of element in terms of oxide, and in a case where the second Y-based oxide contains two or more types of elements other than Y and O, the total content of the two or more types of elements in terms of oxide.

### <Y-Zr-based oxide>

A Y-Zr-based oxide is one type of the Y-based oxide (preferably one type of the second Y-based oxide) and means a complex oxide containing Y and Zr.

The Y-Zr-based oxide is, for example, in the form of a particle.

The Y-Zr-based oxide is used as a carrier for a catalytically-active component. From the viewpoint of improving the supportability for a catalytically-active component, the Y-Zr-based oxide is preferably porous.

In the Y-Zr-based oxide, Y may form a solid solution phase with Zr and O, or may form a single phase (for example, a single phase of Y₂O₃) which is a crystalline phase or an amorphous phase, or may form both of the solid solution phase and the single phase. It is preferable that at least part of Y forms the solid solution phase.

In the Y-Zr-based oxide, Zr may form a solid solution phase with Y and O, or may form a single phase (for example, a single phase of ZrO₂) which is a crystalline phase or an amorphous phase, or may form both of the solid solution phase and the single phase. It is preferable that at least part of Zr forms the solid solution phase.

In the Y-Zr-based oxide, the total of the content of Y in terms of oxide and the content of Zr in terms of oxide is preferably 60% by mass or more, more preferably 70% by mass or more, and still more preferably 80% by mass or more, based on the mass of the Y-Zr-based oxide, from the viewpoint of improving the heat resistance of the Y-Zr-based oxide. The upper limit is 100% by mass.

In the Y-Zr-based oxide, the content of Y in terms of oxide is preferably 5% by mass or more and 90% by mass or less, more preferably 7% by mass or more and 80% by mass or less, still more preferably 10% by mass or more and 70% by mass or less, still more preferably 15% by mass or more and 60% by mass or less, and still more preferably 20% by mass or more and 55% by mass or less, based on the mass of the Y-Zr-based oxide, from the viewpoint of effectively exerting the performance of Y described below.

In the Y-Zr-based oxide, the content of Zr in terms of oxide is preferably 10% by mass or more and 95% by mass or less, more preferably 30% by mass or more and 95% by mass or less, and still more preferably 40% by mass or more and 90% by mass or less, based on the mass of the Y-Zr-based oxide, from the viewpoint of improving the heat resistance of the Y-Zr-based oxide.

The Y-Zr-based oxide may or may not contain one or more types of elements other than Y, Zr, and O.

The one or more types of elements other than Y, Zr, and O can be selected from a rare earth element (Ln) other than Y, an alkaline earth metal element (for example, Mg, Ca, Sr, Ba, or the like), Fe, Mn, Ni, Al, and the like.

The Y-Zr-based oxide can contain, for example, at least one selected from La, Nd, Gd, and Sm as Ln other than Y. This makes it possible to improve the heat resistance of the Y-Zr-based oxide. From the viewpoint of improving the heat resistance of the Y-Zr-based oxide, Ln other than Y is preferably selected from La and Nd.

The Y-Zr-based oxide can contain Ce as Ln other than Ce. The Y-Zr-based oxide containing Ce has the oxygen storage capacity, thereby mitigating fluctuations in the oxygen concentration in exhaust gas and expanding the operating window of a catalytically active component. Therefore, when the Y-Zr-based oxide containing Ce is used, the exhaust gas purification performance of an exhaust gas purification catalyst is improved.

The Y-Zr-based oxide containing Ce can contain, for example, Pr as Ln other than Y and Ce. This makes it possible to improve the oxygen storage capacity of the Y-Zr-based oxide containing Ce.

In a case where the Y-Zr-based oxide contains Ln other than Y, Ln other than Y may form a solid solution phase with Zr and/or Y as well as O, or may form a single phase (for example, a single phase of an oxide of Ln other than Y) which is a crystalline phase or an amorphous phase, or may form both of the solid solution phase and the single phase. It is preferable that at least part of Ln other than Y forms the solid solution phase.

In a case where the Y-Zr-based oxide contains Ln other than Y, the content of Ln other than Y in terms of oxide in the Y-Zr-based oxide is preferably 1% by mass or more and 40% by mass or less, more preferably 3% by mass or more and 30% by mass or less, and still more preferably 5% by mass or more and 20% by mass or less, based on the mass of the Y-Zr-based oxide, from the viewpoint of improving the heat resistance of the Y-Zr-based oxide. The expression "the content of Ln other than Y in terms of oxide" means, in a case where the Y-Zr-based oxide contains one type of Ln other than Y, the content of the one type of Ln in terms of oxide, and in a case where the Y-Zr-based oxide contains two or more types of Ln other than Y, the total content of the two or more types of Ln in terms of oxide.

### <Al-based oxide>

An Al-based oxide means an oxide containing Al.

The Al-based oxide is, for example, in the form of a particle.

The Al-based oxide is used as a carrier for a catalytically-active component. From the viewpoint of improving the supportability for a catalytically-active component, the Al-based oxide is preferably porous.

The Al-based oxide may or may not contain one or more types of elements other than Al and O.

The one or more types of elements other than Al and O can be selected from, for example, a rare earth element (Ln) (for example, Y, Ce, La, Nd, Pr, or the like), an alkaline earth metal element (for example, Mg, Ca, Sr, Ba, or the like), B, Si, Zr, Cr, and the like.

The Al-based oxide can contain, for example, at least one selected from La, Nd, Y, Gd, and Sm as Ln. This makes it possible to improve the heat resistance of the Al-based oxide. From the viewpoint of improving the heat resistance of the Al-based oxide, Ln is preferably selected from La, Nd, and Y.

The Al-based oxide can contain, for example, Ce as Ln. The Al-based oxide containing Ce has the oxygen storage capacity, thereby mitigating fluctuations in the oxygen concentration in exhaust gas and expanding the operating window of a catalytically active component. Therefore, when the Al-based oxide containing Ce is used, the exhaust gas purification performance of an exhaust gas purification catalyst is improved.

The Al-based oxide containing Ce can contain, for example, Pr as Ln other than Ce. This makes it possible to improve the oxygen storage capacity of the Al-based oxide containing Ce.

Examples of the Al-based oxide include alumina (an oxide composed of Al and O), an oxide obtained by modifying the surface of alumina with the element other than Al and O, and an oxide obtained by dissolving the element other than Al and O in alumina. Examples of the Al-based oxide containing the element other than Al and O include alumina-silica, alumina-silicate, alumina-zirconia, alumina-chromia, alumina-ceria, and alumina-lanthana.

In the Al-based oxide, the element other than Al and O may form a solid solution phase with Al and O, or may form a single phase (for example, an oxide phase of the element other than Al and O) which is a crystalline phase or an amorphous phase, or may form both of the solid solution phase and the single phase.

In the Al-based oxide, the content of Al in terms of oxide is preferably 50% by mass or more, more preferably 60% by mass or more, still more preferably 70% by mass or more, still more preferably 80% by mass or more, still more preferably 90% by mass or more, and still more preferably 95% by mass or more, based on the mass of the Al-based oxide, from the viewpoint of improving the heat resistance of the Al-based oxide. The upper limit is 100% by mass.

In a case where the Al-based oxide contains the element other than Al and O, the content of the element other than Al and O in terms of oxide in the Al-based oxide is preferably 0.1% by mass or more and 50% by mass or less, more preferably 0.1% by mass or more and 40% by mass or less, still more preferably 0.1% by mass or more and 30% by mass or less, still more preferably 0.2% by mass or more and 20% by mass or less, still more preferably 0.3% by mass or more and 10% by mass or less, and still more preferably 0.5% by mass or more and 5% by mass or less, based on the mass of the Al-based oxide, from the viewpoint of improving the heat resistance of the Al-based oxide. The expression "the content of the element other than Al and O in terms of oxide" means, in a case where the Al-based oxide contains one type of element other than Al and O, the content of the one type of element in terms of oxide, and, in a case where the Al-based oxide contains two or more types of elements other than Al and O, the total content of the two or more types of elements in terms of oxide.

### <<Exhaust gas purification catalyst>>

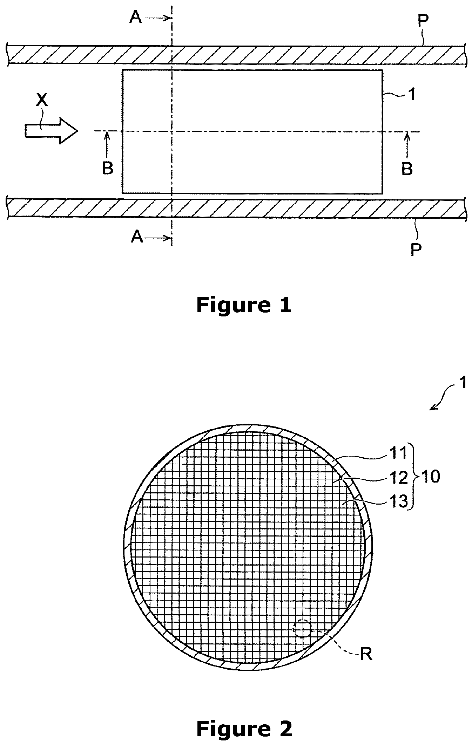

With reference to Figures 1 to 4, an exhaust gas purification catalyst 1 according to an embodiment of the present invention will be described below.

As shown in Figure 1, the exhaust gas purification catalyst 1 is disposed in an exhaust gas path in an exhaust pipe P of an internal combustion engine. The internal combustion engine is, for example, a gasoline engine. Exhaust gas emitted from the internal combustion engine flows through the exhaust gas path in the exhaust pipe P from one end to the other end of the exhaust pipe P, and is purified by the exhaust gas purification catalyst 1 provided in the exhaust pipe P. In the drawings, the exhaust gas flow direction is denoted by the reference sign X. In the present specification, the upstream position in the exhaust gas flow direction X may be referred to as the "exhaust gas inflow side" or "upstream side", and the downstream position in the exhaust gas flow direction X may be referred to as the "exhaust gas outflow side" or "downstream side".

In the exhaust gas path in the exhaust pipe P, another exhaust gas purification catalyst may be disposed on the upstream or downstream side of the exhaust gas purification catalyst 1. For example, the exhaust gas purification catalyst 1 may be disposed on the upstream side of the exhaust gas path in the exhaust pipe P, and another exhaust gas purification catalyst may be disposed on the downstream side of the exhaust gas path in the exhaust pipe P.

As shown in Figures 2 to 4, the exhaust gas purification catalyst 1 includes a substrate 10 and a first catalyst layer 20 provided on the substrate 10.

The exhaust gas purification catalyst 1 may include a catalyst layer(s) other than the first catalyst layer 20, wherein the other layer(s) may be provided on one or more positions selected from the underside side, the upside, the downstream side, and the upstream side of the first catalyst layer 20. In the present embodiment, the exhaust gas purification catalyst 1 further includes a second catalyst layer 30 provided on the substrate 10. The second catalyst layer 30 is a layer provided as necessary. Therefore, the present invention also encompasses an embodiment in which the second catalyst layer 30 is omitted. However, from the viewpoint of improving the exhaust gas purification performance, the exhaust gas purification catalyst 1 preferably includes the second catalyst layer 30.

### <Substrate>

Hereinafter, the substrate 10 will be described.

The material of the substrate 10 can be selected as appropriate. The material of the substrate 10 is preferably a material that allows the substrate 10 to stably maintain its shape even when the substrate 10 is exposed to an exhaust gas at a high temperature. The material of the substrate 10 can be selected from ceramic materials and metallic materials. The ceramic materials can be selected from, for example, carbide ceramics such as silicon carbide, titanium carbide, tantalum carbide, and tungsten carbide; nitride ceramics such as aluminum nitride, silicon nitride, boron nitride, and titanium nitride; oxide ceramics such as alumina, zirconia, cordierite, mullite, zircon, aluminum titanate, and magnesium titanate. The metallic materials can be selected from alloys such as stainless steel.

In the present specification, the term "high temperature" means a temperature of preferably 850°C or more, and more preferably 900°C or more.

As shown in Figures 2 to 4, the substrate 10 includes a tubular member 11, a partition wall 12 provided in the tubular member 11, and cells 13 separated from each other by the partition wall 12. The substrate 10 preferably has a honeycomb structure.

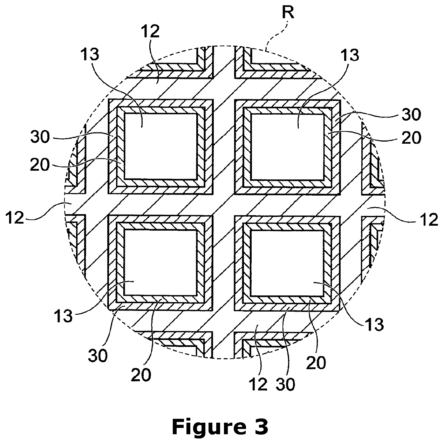

As shown in Figures 2 and 3, the tubular member 11 defines the external shape of the substrate 10, and the axis direction of the tubular member 11 is coincident with the axis direction of the substrate 10. As shown in Figure 2, the tubular member 11 has a hollow cylindrical shape, but may have another shape, such as a hollow elliptic cylindrical shape or a polygonal tubular shape.

As shown in Figures 2 and 3, the partition wall 12 is provided in the tubular member 11. As shown in Figures 2 to 4, the partition wall 12 is present between adjacent cells 13, whereby the adjacent cells 13 are separated from each other by the partition wall 12. The thickness of the partition wall 12 is, for example, 20 µm or more and 1500 µm or less. The partition wall 12 may have a porous structure allowing exhaust gas to pass through.

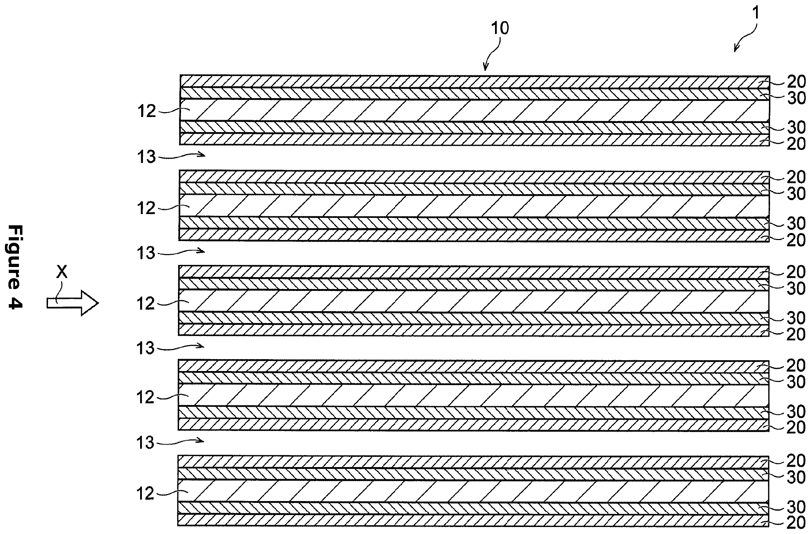

As shown in Figure 4, each cell 13 extends in the exhaust gas flow direction X and has an end on the exhaust gas inflow side and an end on the exhaust gas outflow side.

As shown in Figure 4, the end on the exhaust gas inflow side and the end on the exhaust gas outflow side of each cell 13 are both open. Therefore, the exhaust gas that has flowed in from the end (opening) on the exhaust gas inflow side of each cell 13 flows out from the end (opening) on the exhaust gas outflow side of each cell 13. Such a mode is called a flow-through type.

As shown in Figures 2 and 3, the shape in a plan view of the end (opening) on the exhaust gas inflow side of each cell 13 is rectangle, but may be another shape, such as hexagon or octagon. The same applies to the shape in a plan view of the end (opening) on the exhaust gas outflow side of each cell 13.

The cell density per square inch of the substrate 10 is, for example, 100 cells or more and 1000 cells or less. The cell density per square inch of the substrate 10 means the total number of the cells 13 per square inch in a cross-section obtained by cutting the substrate 10 by a plane perpendicular to the exhaust gas flow direction X.

The volume of the substrate 10 is, for example, 0.1 L or more and 20 L or less. The volume of substrate 10 means an apparent volume of the substrate 10. In a case where the substrate 10 is in the form of a cylinder, the outer diameter of the substrate 10 is 2r and the length of the substrate 10 is L, the volume of the substrate 10 is represented by the formula: Volume of substrate 10 = π × r² × L.

The substrate 10 may be provided with a first sealing member that seals the ends on the exhaust gas outflow side of some of the cells 13 and with a second sealing member that seals the ends on the exhaust gas inflow side of the remaining cells 13, so that some of the cells 13 are each an inflow-side cell in which the end on the exhaust gas inflow side is open and the end on the exhaust gas outflow side is closed by the first sealing member, and the remaining cells 13 are each an outflow-side cell in which the end on the exhaust gas inflow side is closed by the second sealing member and the end on the exhaust gas outflow side is open. A plurality of (for example, four) outflow-side cells are arranged around and adjacent to one inflow-side cell, and the inflow-side cell and the outflow-side cells adjacent to the inflow-side cell are separated from each other by the porous partition wall 12. The exhaust gas that has flowed in from the end (opening) on the exhaust gas inflow side of the inflow-side cell passes through the porous partition wall 12 and flows out from the end (opening) on the exhaust gas outflow side of the outflow-side cell. Such a mode is called a wall-flow type. In a case of the wall-flow type, the partition wall 12 has a porous structure allowing exhaust gas to pass through.

### <First catalyst layer>

Hereinafter, the first catalyst layer 20 will be described.

As shown in Figures 3 and 4, the first catalyst layer 20 is provided on the upside of the second catalyst layer 30.

The expression that "the first catalyst layer 20 is provided on the upside of the second catalyst layer 30" means that part or the whole of the first catalyst layer 20 is present on, of the two main surfaces of the second catalyst layer 30, the main surface opposite to the main surface on the partition wall 12 side. The expression "the main surface of the second catalyst layer 30" means an outer surface of the second catalyst layer 30, the outer surface extending in the exhaust gas flow direction X. The first catalyst layer 20 may be provided so that the first catalyst layer 20 covers part of the main surface of the second catalyst layer 30, or so that the first catalyst layer 20 covers the whole of the main surface of the second catalyst layer 30. The first catalyst layer 20 may be provided directly on the main surface of the second catalyst layer 30 or may be provided on the main surface of the second catalyst layer 30 via another layer. Usually, the first catalyst layer 20 is provided directly on the main surface of the second catalyst layer 30. The expression "the first catalyst layer 20 provided on the substrate 10" encompasses an embodiment wherein the first catalyst layer 20 is provided directly on the main surface of the second catalyst layer 30, and an embodiment wherein the first catalyst layer 20 is provided on the main surface of the second catalyst layer 30 via another layer.

In a case where the second catalyst layer 30 is omitted, the first catalyst layer 20 is provided on the surface on the cell 13 side of the partition wall 12. The expression "the surface on the cell 13 side of the partition wall 12" means an outer surface of the partition wall 12, the outer surface extending in the exhaust gas flow direction X. The first catalyst layer 20 may be provided directly on the surface on the cell 13 side of the partition wall 12 or may be provided on the surface on the cell 13 side of the partition wall 12 via another layer. Usually, the first catalyst layer 20 is provided directly on the surface on the cell 13 side of the partition wall 12.

In a case where the first catalyst layer 20 is provided directly on the surface on the cell 13 side of the partition wall 12, the first catalyst layer 20 may be composed of a structure rising from the surface on the cell 13 side of the partition wall 12 toward the cell 13 side (hereinafter referred to as the "rising structure"), or may be composed of a structure present inside the partition wall 12 (hereinafter referred to as the "internal structure"), or may have both of the rising structure and the internal structure. The expression "the first catalyst layer 20 provided on the substrate 10" encompasses an embodiment wherein the first catalyst layer 20 is composed of the rising structure, an embodiment wherein the first catalyst layer 20 is composed of the internal structure, and an embodiment wherein the first catalyst layer 20 has both of the rising structure and the internal structure.

As shown in Figure 4, the first catalyst layer 20 extends from the end on the exhaust gas inflow side of the partition wall 12 to the end on the exhaust gas outflow side of the partition wall 12 along the exhaust gas flow direction X. The first catalyst layer 20 may extend from the end on the exhaust gas inflow side of the partition wall 12 along the exhaust gas flow direction X so as not to reach the end on the exhaust gas outflow side of the partition wall 12, or may extend from the end on the exhaust gas outflow side of the partition wall 12 along the direction opposite to the exhaust gas flow direction X so as not to reach the end on the exhaust gas inflow side of the partition wall 12.

From the viewpoint of balancing the exhaust gas purification performance and the cost, the mass (mass after drying and calcining) of the first catalyst layer 20 per unit volume of the portion of the substrate 10 provided with the first catalyst layer 20 is preferably 30 g/L or more and 150 g/L or less, more preferably 40 g/L or more and 120 g/L or less, and still more preferably 50 g/L or more and 100 g/L or less. The mass of the first catalyst layer 20 per unit volume of the portion of the substrate 10 provided with the first catalyst layer 20 is calculated from the formula: (Mass of first catalyst layer 20) / ((Volume of substrate 10) X (Average length L20 of first catalyst layer 20 / Length L10 of substrate 10)).

In the present specification, the expression "the mass of the first catalyst layer 20" means the total mass calculated by categorizing all metal elements contained in the first catalyst layer 20 into a noble metal element(s) and a metal element(s) other than the noble metal element(s), obtaining the mass(es) of the noble metal element(s) in terms of metal and the mass(es) of the metal element(s) other than the noble metal element(s) in terms of oxide, and totalizing the obtained masses. In other words, the expression "the mass of the first catalyst layer 20" means the calculated mass obtained by totalizing the mass(es) of the noble metal element(s) contained in the first catalyst layer 20 in terms of metal and the mass(es) of the metal element(s) other than the noble metal element(s) contained in the first catalyst layer 20 in terms of oxide. The term "metal element" encompasses metalloid elements such as Si, B, and the like.

In the present specification, the term "noble metal element" encompasses Pt, Pd, Rh, Au, Ag, Ru, Ir, and Os.

The meaning of the term "oxide" is as defined in the section <Oxide> described above.

One example of the method of measuring the average length L20 of the first catalyst layer 20 is as follows:
A sample extending in the axial direction of the substrate 10 and having the same length as the length L10 of the substrate 10 is cut out from the exhaust gas purification catalyst 1. The sample is, for example, in the form of a cylinder having a diameter of 25.4 mm. The value of the diameter of the sample can be changed as necessary. The sample is cut at 5 mm intervals in planes perpendicular to the axial direction of the substrate 10 to obtain cut pieces, which are referred to as the first cut piece, the second cut piece and so on up to the n-th cut piece, sequentially from the side of the end on the exhaust gas inflow side of the sample. The length of each cut piece is 5 mm. The composition of each cut piece is analyzed using an inductively coupled plasma emission spectrophotometer (ICP-OES), an X-ray fluorescence analyzer (XRF), a scanning electron microscope-energy dispersive X-ray spectroscopy (SEM-EDX), or the like, and it is confirmed whether or not each cut piece includes part of the first catalyst layer 20, based on the composition of each cut piece.

The compositional analysis is not necessarily performed for a cut piece that apparently includes part of the first catalyst layer 20. For example, it is possible to confirm whether or not each cut piece includes part of the first catalyst layer 20, by observing the cross section thereof using a scanning electron microscope (SEM), an electron probe microanalyzer (EPMA), or the like. At the time of observing the cross section, element mapping of the cross section may be performed. The element mapping can be performed, for example, using SEM-EDX, EPMA, a transmission X-ray inspection apparatus, or the like.

After confirming whether or not each cut piece includes part of the first catalyst layer 20, the length of the first catalyst layer 20 included in the sample is calculated based on the following formula: Length of first catalyst layer 20 included in sample = 5 mm × (Number of cut pieces each including part of first catalyst layer 20)

For example, in a case where each of the first cut piece to the k-th cut piece includes part of the first catalyst layer 20, whereas each of the (k + 1)-th to the n-th cut pieces does not include part of the first catalyst layer 20, the length of the first catalyst layer 20 included in the sample is (5 × k) mm.

One example of more specifically measuring the length of the first catalyst layer 20 included in the sample is as follows:
The k-th cut piece (namely, the cut piece closest to the exhaust gas outflow side, among the cut pieces each including part of the first catalyst layer 20) is cut in the axial direction of the substrate 10, and part of the first catalyst layer 20 existing in the resulting cross section is observed using SEM, EPMA, or the like, to measure the length of part of the first catalyst layer 20 included in the k-th cut piece. Thereafter, the length of the first catalyst layer 20 included in the sample is calculated based on the following formula: Length of first catalyst layer 20 included in sample = (5 mm × (k-1)) + (Length of part of first catalyst layer 20 included in k-th cut piece)

The length of the first catalyst layer 20 included in the sample is calculated for 8 to 16 samples arbitrarily cut out from the exhaust gas purification catalyst 1, and the mean value of the measured lengths is defined as the average length L20 of the first catalyst layer 20.

In a case where information (composition, amount, and the like) about raw materials used for production of the first catalyst layer 20 is known, the mass of the first catalyst layer 20 per unit volume of the portion of the substrate 10 provided with the first catalyst layer 20 is calculated from the information about the raw materials used for production of the first catalyst layer 20.

The first catalyst layer 20 contains Rh, Ce, and Y.

It is preferable that the first catalyst layer 20 further contains Zr. When the first catalyst layer 20 contains Zr, the heat resistance of the first catalyst layer 20 is improved.

In the present specification, "a" represents the mole percentage of the molar amount of Ce in the first catalyst layer 20 based on the total molar amount of all metal elements in the first catalyst layer 20, "b" represents the mole percentage of the molar amount of Y in the first catalyst layer 20 based on the total molar amount of all metal elements in the first catalyst layer 20, "c" represents the mole percentage of the molar amount of Rh in the first catalyst layer 20 based on the total molar amount of all metal elements in the first catalyst layer 20, and "d" represents the mole percentage of the molar amount of Zr in the first catalyst layer 20 based on the total molar amount of all metal elements in the first catalyst layer 20.

In the present specification, the expression "the molar amount of Ce in the first catalyst layer 20" means, in a case where the first catalyst layer 20 contains one type of Ce source, the molar amount of Ce derived from the one type of Ce source, and, in a case where the first catalyst layer 20 contains two or more types of Ce sources, the total molar amount of Ce derived from the two or more types of Ce sources. The Ce source will be described below.

In the present specification, the expression "the molar amount of Y in the first catalyst layer 20" means, in a case where the first catalyst layer 20 contains one type of Y source, the molar amount of Y derived from the one type of Y source, and, in a case where the first catalyst layer 20 contains two or more types of Y sources, the total molar amount of Y derived from the two or more types of Y sources. The Y source will be described below.

In the present specification, the expression "the molar amount of Zr in the first catalyst layer 20" means, in a case where the first catalyst layer 20 contains one type of Zr source, the molar amount of Zr derived from the one type of Zr source, and, in a case where the first catalyst layer 20 contains two or more types of Zr sources, the total molar amount of Zr derived from the two or more types of Zr sources. The Zr source will be described below.

It is desirable that an air-fuel ratio (A/F) during supply to an internal combustion engine be controlled to be near a theoretical air-fuel ratio (stoichiometry). However, since an actual air-fuel ratio swings, with a stoichiometry at a center, to a rich side (fuel-rich atmosphere) or a lean side (fuel-lean atmosphere), depending on driving conditions of a motor vehicle or the like, an air-fuel ratio of exhaust gas similarly swings to a rich or lean side. When a material having the oxygen storage capacity (OSC), such as the Ce-based oxide (for example, the first Ce-based oxide, the second Ce-based oxide, the Ce-Zr-based oxide, or the like), the Y-based oxide containing Ce (for example, the first Y-based oxide containing Ce, the second Y-based oxide containing Ce, the Y-Zr-based oxide containing Ce, or the like), the Al-based oxide containing Ce, or the like, is used, fluctuations in the oxygen concentration in exhaust gas are mitigated and the exhaust gas purification performance of Rh is improved. Ce contributes to the oxygen storage capacity. Thus, as the amount of Ce is increased, the oxygen storage capacity is improved, thereby resulting in improvement in the exhaust gas purification performance of Rh. However, Ce accelerates the oxidation of Rh. Thus, when the amount of Ce is excessive, the oxidation of Rh is accelerated, thereby resulting in decrease in the exhaust gas purification performance of Rh. On the other hand, Y has the property of lowering the temperature at which oxidized Rh is reduced. Thus, as the amount of Y is increased, Rh oxidized by exhaust gas in a lean state is reduced more quickly by exhaust gas in a rich state, thereby resulting in improvement in the exhaust gas purification performance of Rh. However, when the amount of Y is excessive, the heat resistance is decreased.

From the viewpoint of effectively achieving the improvement in the exhaust gas purification performance of Rh due to the improvement in the oxygen storage capacity, the prevention of the decrease in the exhaust gas purification performance of Rh due to the accelerated oxidation of Rh, the improvement in the exhaust gas purification performance of Rh due to the quick reduction of oxidized Rh, and the prevention of the decrease in the heat resistance, the value of "a"/"b" is preferably 0.010 or more and 0.400 or less, more preferably 0.020 or more and 0.300 or less, and still more preferably 0.040 or more and 0.200 or less.

From the viewpoint of more effectively achieving the improvement in the exhaust gas purification performance of Rh due to the improvement in the oxygen storage capacity, the prevention of the decrease in the exhaust gas purification performance of Rh due to the accelerated oxidation of Rh, the improvement in the exhaust gas purification performance of Rh due to the quick reduction of oxidized Rh, and the prevention of the decrease in the heat resistance, the value of "c"/"b" is preferably 0.0010 or more and 0.0270 or less, more preferably 0.0030 or more and 0.0200 or less, and still more preferably 0.0050 or more and 0.0120 or less.

From the viewpoint of more effectively achieving the improvement in the exhaust gas purification performance of Rh due to the improvement in the oxygen storage capacity, "a" is preferably 0.5 mol% or more, more preferably 0.7 mol% or more, and still more preferably 1.0 mol% or more. From the viewpoint of more effectively achieving the prevention of the decrease in the exhaust gas purification performance of Rh due to the accelerated oxidation of Rh, "a" is preferably 25 mol% or less, more preferably 20 mol% or less, and still more preferably 15 mol% or less. Each of these upper limits may be combined with any of the above-described lower limits.

From the viewpoint of more effectively achieving the improvement in the exhaust gas purification performance of Rh due to the quick reduction of oxidized Rh, "b" is preferably 11 mol% or more, more preferably 15 mol% or more, still more preferably 19 mol% or more, and still more preferably 25 mol% or more. From the viewpoint of more effectively achieving the prevention of the decrease in the heat resistance, "b" is preferably 50 mol% or less, more preferably 45 mol% or less, and still more preferably 40 mol% or less. Each of these upper limits may be combined with any of the above-described lower limits.

From the viewpoint of balancing the exhaust gas purification performance and the cost, "c" is preferably 0.001 mol% or more and 10 mol% or less, more preferably 0.005 mol% or more and 5 mol% or less, and still more preferably 0.01 mol% or more and 1 mol% or less.

From the viewpoint of balancing the improvement in the heat resistance and the improvement in the exhaust gas purification performance, "d" is preferably 10 mol% or more and 80 mol% or less, more preferably 13 mol% or more and 70 mol% or less, and still more preferably 15 mol% or more and 60 mol% or less.

Rh is contained in the first catalyst layer 20 in the form capable of functioning as a catalytically-active component, for example, in the form of a catalytically-active component containing Rh, such as metal Rh, an alloy containing Rh, a compound containing Rh (for example, an oxide of Rh), or the like. The catalytically-active component containing Rh is, for example, in the form of a particle.

The first catalyst layer 20 may contain one or more types of noble metal elements other than Rh. The noble metal element other than Rh can be selected from, for example, Au, Ag, Pt, Pd, Ir, Ru, Os, and the like. The noble metal element other than Rh is contained in the first catalyst layer 20 in the form capable of functioning as a catalytically-active component, for example, in the form of a catalytically-active component containing the noble metal element other than Rh, such as metal, an alloy containing the noble metal element, a compound containing the noble metal element (for example, an oxide of the noble metal element), or the like. The catalytically-active component containing the noble metal element other than Rh is, for example, in the form of a particle.

In a case where the first catalyst layer 20 contains Rh and the noble metal element other than Rh, Rh and the noble metal element other than Rh may form an alloy, thereby resulting in decrease in the active sites of Rh participating in exhaust gas purification. Accordingly, it is preferable that the first catalyst layer 20 is substantially free of the noble metal other than Rh.

The expression that "the first catalyst layer 20 is substantially free of the noble metal element other than Rh" means that the mass percentage of the mass of the noble metal element other than Rh in terms of metal in the first catalyst layer 20 based on the mass of Rh in terms of metal in the first catalyst layer 20 is preferably 1.0% by mass or less, more preferably 0.5% by mass or less, and still more preferably 0.1% by mass or less. The lower limit is zero. The expression "the mass of the noble metal element other than Rh in terms of metal in the first catalyst layer 20" means, in a case where the first catalyst layer 20 contains one type of noble metal element other than Rh, the mass of the one type of noble metal element in terms of metal, and, in a case where the first catalyst layer 20 contains two or more types of noble metal elements other than Rh, the total mass of the two or more types of noble metal elements in terms of metal.

The first catalyst layer 20 contains one or more types of Ce sources.

The Ce source is an oxide containing Ce. The Ce source is preferably selected from the group consisting of: the Ce-based oxide containing Y (for example, the first Ce-based oxide containing Y, the second Ce-based oxide containing Y, the Ce-Zr-based oxide containing Y, or the like); the Ce-based oxide not containing Y (for example, the first Ce-based oxide not containing Y, the second Ce-based oxide not containing Y, the Ce-Zr-based oxide not containing Y, or the like); the Y-based oxide containing Ce (for example, the first Y-based oxide containing Ce, the second Y-based oxide containing Ce, the Y-Zr-based oxide containing Ce, or the like); the Al-based oxide containing Ce and Y; and the Al-based oxide containing Ce and not containing Y.

The Ce source need not be an oxide different from the Y source, and may be the same oxide as the Y source. For example, each of the Ce-based oxide containing Y, the Y-based oxide containing Ce, and the Al-based oxide containing Ce and Y is not only the Ce source, but also the Y source.

The first catalyst layer 20 contains one or more types of Y sources.

The Y source is an oxide containing Y. The Y source is preferably selected from the group consisting of: the Y-based oxide containing Ce (for example, the first Y-based oxide containing Ce, the second Y-based oxide containing Ce, the Y-Zr-based oxide containing Ce, or the like); the Y-based oxide not containing Ce (for example, the first Y-based oxide not containing Ce, the second Y-based oxide not containing Ce, the Y-Zr-based oxide not containing Ce, or the like); the Ce-based oxide containing Y (for example, the first Ce-based oxide containing Y, the second Ce-based oxide containing Y, the Ce-Zr-based oxide containing Y, or the like); the Al-based oxide containing Y and Ce; and the Al-based oxide containing Y and not containing Ce.

The Y source need not be an oxide different from the Ce source, and may be the same oxide as the Ce source.

When the first catalyst layer 20 contains Zr, the first catalyst layer 20 contains one or more types of Zr sources.

The Zr source is an oxide containing Zr. The Zr source is preferably selected from the group consisting of: the Ce-based oxide containing Zr (for example, the first Ce-based oxide containing Zr, the second Ce-based oxide containing Zr, the Ce-Zr-based oxide, or the like); the Y-based oxide containing Zr (for example, the first Y-based oxide containing Zr, the second Y-based oxide containing Zr, the Y-Zr-based oxide, or the like); and the Al-based oxide containing Zr, more preferably selected from the Ce-based oxide containing Zr and the Y-based oxide containing Zr, and still more preferably selected from the Ce-Zr-based oxide and the Y-Zr-based oxide.

The Zr source need not be an oxide different from the Ce source, and may be the same oxide as the Ce source. For example, each of the Ce-based oxide containing Zr, the Y-based oxide containing Ce and Zr, and the Al-based oxide containing Ce and Zr is not only the Ce source, but also the Zr source.

The Zr source need not be an oxide different from the Y source, and may be the same oxide as the Y source. For example, each of the Ce-based oxide containing Y and Zr, the Y-based oxide containing Zr, and the Al-based oxide containing Y and Zr is not only the Y source, but also the Zr source.

The Zr source may be the same oxide as the Ce source and the Y source. For example, each of the Ce-based oxide containing Y and Zr, the Y-based oxide containing Ce and Zr, and the Al-based oxide containing Ce, Y and Zr is not only the Ce source and the Y source, but also the Zr source.

The proportion of the molar amount of Zr derived from the Ce-based oxide containing Zr and the Y-based oxide containing Zr to the total molar amount of Zr in the first catalyst layer 20 is preferably 80% by mass or more, more preferably 90% by mass or more, and still more preferably 95% by mass or more. The upper limit is 100% by mass. The expression "the molar amount of Zr derived from the Ce-based oxide containing Zr and the Y-based oxide containing Zr" means, in a case where the first catalyst layer 20 contains the Ce-based oxide containing Zr and does not contain the Y-based oxide containing Zr, the molar amount of Zr derived from the Ce-based oxide containing Zr; in a case where the first catalyst layer 20 contains the Y-based oxide containing Zr and does not contain the Ce-based oxide containing Zr, the molar amount of Zr derived from the Y-based oxide containing Zr; and, in a case where the first catalyst layer 20 contains the Ce-based oxide containing Zr and the Y-based oxide containing Zr, the total of the molar amount of Zr derived from the Ce-based oxide containing Zr and the molar amount of Zr derived from the Y-based oxide containing Zr.

When the first catalyst layer 20 contains Zr, the first catalyst layer 20 contain as two or more of the Ce source, the Y source and the Zr source, preferably at least one selected from the group consisting of: the Ce-based oxide containing Zr (for example, the first Ce-based oxide containing Zr, the second Ce-based oxide containing Zr, the Ce-Zr-based oxide, or the like); and the Y-based oxide containing Zr (for example, the first Y-based oxide containing Zr, the second Y-based oxide containing Zr, the Y-Zr-based oxide, or the like), and more preferably at least one selected from the Ce-Zr-based oxide and the Y-Zr-based oxide. The first catalyst layer 20 may further contain as one or more of the Ce source, the Y source and the Zr source, at least one selected from the group consisting of: the Ce-based oxide not containing Zr (for example, the first Ce-based oxide not containing Zr, the second Ce-based oxide not containing Zr, or the like); the Y-based oxide not containing Zr (for example, the first Y-based oxide not containing Zr, the second Y-based oxide not containing Zr, or the like); and the Al-based oxide containing one, two or three of Ce, Y and Zr.

The first catalyst layer 20 may further contain Al. When the first catalyst layer 20 contains Al, the heat resistance of the first catalyst layer 20 is improved.

When the first catalyst layer 20 contains Al, the first catalyst layer 20 contains one or more types of Al sources.

The Al source is an oxide containing Al. The oxide containing Al can be selected from the Al-based oxide, the Ce-based oxide containing Al, the Y-based oxide containing Al, and the like.

The first catalyst layer 20 preferably contains the Al-based oxide as the Al source. The first catalyst layer 20 may further contain as the Al source at least one selected from the Ce-based oxide containing Al and the Y-based oxide containing Al.

When "e" represents the mole percentage of the molar amount of Al in the first catalyst layer 20 based on the total molar amount of all metal elements in the first catalyst layer 20, "e" is preferably 5 mol% or more and 90 mol% or less, more preferably 10 mol% or more and 85 mol% or less, and still more preferably 20 mol% or more and 80 mol% or less, from the viewpoint of balancing the improvement in the heat resistance and the achievement of the above-described functions of Ce and Y. The expression "the molar amount of Al in the first catalyst layer 20" means, in a case where the first catalyst layer 20 contains one type of Al source, the molar amount of Al derived from the one type of Al source, and, in a case where the first catalyst layer 20 contains two or more types of Al sources, the total molar amount of Al derived from the two or more types of Al sources.

The first catalyst layer 20 may further contain one or more types of Ln other than Ce and Y. The first catalyst layer 20 can contain as Ln other than Ce and Y, for example, at least one selected from La, Nd, Gd, and Sm. This makes it possible to improve the heat resistance of the first catalyst layer 20. From the viewpoint of improving the heat resistance of the first catalyst layer 20, Ln other than Ce and Y is preferably selected from La and Nd. The first catalyst layer 20 can contain, for example, Pr as Ln other than Ce and Y. This makes it possible to improve the oxygen storage capacity of the first catalyst layer 20.

When the first catalyst layer 20 contains Ln other than Ce and Y, the first catalyst layer 20 contains one or more types of Ln sources.

The Ln source is an oxide containing Ln other than Ce and Y. The oxide containing Ln other than Ce and Y can be selected from the Al-based oxide containing Ln other than Ce and Y, the Ce-based oxide containing Ln other than Ce and Y, the Y-based oxide containing Ln other than Ce and Y, and the like.

The Ln source need not be an oxide different from the Ce source, and may be the same oxide as the Ce source. For example, each of the Ce-based oxide containing Ln other than Ce and Y, the Y-based oxide containing Ce and Ln other than Ce and Y, and the Al-based oxide containing Ce and Ln other than Ce and Y is not only the Ln source, but also the Ce source.

The Ln source need not be an oxide different from the Y source, and may be the same oxide as the Y source. For example, each of the Y-based oxide containing Ln other than Ce and Y, the Ce-based oxide containing Y and Ln other than Ce and Y, and the Al-based oxide containing Y and Ln other than Ce and Y is not only the Ln source, but also the Y source.

The Ln source may be the same oxide as the Ce source and the Y source. For example, each of the Ce-based oxide containing Y and Ln other than Ce and Y, the Y-based oxide containing Ce and Ln other than Ce and Y, and the Al-based oxide containing Ce, Y and Ln other than Ce and Y is not only the Ln source, but also the Ce source and the Y source.

When "f" represents the mole percentage of the molar amount of Ln other than Ce and Y in the first catalyst layer 20 based on the total molar amount of all metal elements in the first catalyst layer 20, "f" is preferably 0.5 mol% or more and 40 mol% or less, more preferably 1 mol% or more and 20 mol% or less, and still more preferably 2 mol% or more and 13 mol% or less, from the viewpoint of balancing the cost and the improvement in the heat resistance. The expression "the molar amount of Ln other than Ce and Y in the first catalyst layer 20" means, in a case where the first catalyst layer 20 contains one type of Ln, the molar amount of the one type of Ln, and, in a case where the first catalyst layer 20 contains two or more types of Ln, the total molar amount of the two or more types of Ln. In addition, the expression "the molar amount of Ln other than Ce and Y in the first catalyst layer 20" means, in a case where the first catalyst layer 20 contains one type of Ln source, the molar amount of Ln other than Ce and Y derived from the one type of Ln source, and, in a case where the first catalyst layer 20 contains two or more types of Ln sources, the total molar amount of Ln other than Ce and Y derived from the two or more types of Ln sources.

The proportion of the molar amount of Ln other than Ce and Y derived from the Al-based oxide, the Ce-based oxide and the Y-based oxide to the total molar amount of Ln other than Ce and Y in the first catalyst layer 20 is preferably 80% by mass or more, more preferably 90% by mass or more, and still more preferably 95% by mass or more. The upper limit is 100% by mass. The expression " the molar amount of Ln other than Ce and Y derived from the Al-based oxide, the Ce-based oxide and the Y-based oxide" means, in a case where the first catalyst layer 20 contains one of the Al-based oxide, the Ce-based oxide and the Y-based oxide, the molar amount of Ln other than Ce and Y derived from the one, and, in a case where the first catalyst layer 20 contains two or more of the Al-based oxide, the Ce-based oxide and the Y-based oxide, the total molar amount of Ln other than Ce and Y derived from the two or more.

From the viewpoint of improving the exhaust gas purification performance, it is preferable that the first catalyst layer 20 contains one or more types of carriers, and that at least part of the catalytically-active component is supported on the one or more types of carriers. The one or more types of carriers can be selected from the Ce-based oxide, the Y-based oxide, and the Al-based oxide.

The expression that "at least part of the catalytically-active component is supported on the carrier" means the state where at least part of the catalytically-active component is physically and/or chemically adsorbed and/or retained in an external surface of the carrier and/or an internal surface of a pore of the carrier. The fact that at least part of the catalytically-active component is supported on the carrier can be confirmed by analyzing the first catalyst layer 20 using, for example, scanning electron microscopy-energy dispersive X-ray spectroscopy (SEM-EDX) or the like, to clarify the fact that at least part of the catalytically-active component and the carrier exist in the same region.

The first catalyst layer 20 may contain a binder. The binder can be selected from inorganic binders such as alumina, zirconia, titania, silica, ceria, yttria, and the like. When the binder contains one or more selected from Ce, Y and Zr, the binder is encompassed in one or more of the above-described Ce source, Zr source and Y source.

In a case where the composition of the raw materials used to form the first catalyst layer 20 is known, the molar amount of each metal element in the first catalyst layer 20 can be calculated from the composition of the raw materials used to form the first catalyst layer 20.

Alternatively, the molar amount of each metal element in the first catalyst layer 20 can be measured using a conventional method, such as scanning electron microscopy-energy dispersive X-ray spectroscopy (SEM-EDX), an electron probe microanalyzer (EPMA), X-ray fluorescence analysis (XRF), inductively coupled plasma-atomic emission spectroscopy (ICP-AES), or the like. A specific example is as mentioned below.

First, a test piece cut out of the exhaust gas purification catalyst 1 is pulverized and then analyzed by XRF or ICP-AES, so that among metal elements large in content, top 20 metal elements are identified. The 20 metal elements identified include Rh, Ce, and Y. When the first catalyst layer 20 contains Zr, the 20 metal elements identified include Zr. When the first catalyst layer 20 contains Al, the 20 metal elements identified include Al. The test piece may contain a portion derived from the substrate 10 and/or a portion derived from the second catalyst layer 30 as long as the test piece contains a portion derived from the first catalyst layer 20. In a case where the test piece contains a portion derived from the substrate 10 and/or a portion derived from the second catalyst layer 30, the 20 metal elements identified may contain a metal element constituting the substrate 10 and/or a metal element constituting the second catalyst layer 30.

Then, the first catalyst layer 20 is analyzed by SEM-EDX or EPMA. In SEM-EDX or EPMA, the 20 metal elements identified above are used as analysis objects, and from each of 10 fields of view in SEM, the mol% value of each metal element is analyzed, assuming that the total mol% value of the 20 metal elements is 100 mol%. The average of the mol% values of each metal element in the 10 fields of view is defined as the molar amount of each metal element in the first catalyst layer 20.

### <Second catalyst layer>

Hereinafter, the second catalyst layer 30 will be described.

As shown in Figures 3 and 4, the second catalyst layer 30 is provided on the surface on the cell 13 side of the partition wall 12. The expression "the surface on the cell 13 side of the partition wall 12" means an outer surface of the partition wall 12, the outer surface extending in the exhaust gas flow direction X. The second catalyst layer 30 may be provided directly on the surface on the cell 13 side of the partition wall 12 or may be provided on the surface on the cell 13 side of the partition wall 12 via another layer. Usually, the second catalyst layer 30 is provided directly on the surface on the cell 13 side of the partition wall 12.

The second catalyst layer 30 may be composed of a structure rising from the surface on the cell 13 side of the partition wall 12 toward the cell 13 side (hereinafter referred to as the "rising structure"), or may be composed of a structure present inside the partition wall 12 (hereinafter referred to as the "internal structure"), or may have both of the rising structure and the internal structure. The expression "the second catalyst layer 30 provided on the substrate 10" encompasses an embodiment wherein the second catalyst layer 30 is composed of the rising structure, an embodiment wherein the second catalyst layer 30 is composed of the internal structure, and an embodiment wherein the second catalyst layer 30 has both of the rising structure and the internal structure.

As shown in Figure 4, the second catalyst layer 30 extends from the end on the exhaust gas inflow side of the partition wall 12 to the end on the exhaust gas outflow side of the partition wall 12 along the exhaust gas flow direction X. The second catalyst layer 30 may extend from the end on the exhaust gas inflow side of the partition wall 12 along the exhaust gas flow direction X so as not to reach the end on the exhaust gas outflow side of the partition wall 12, or may extend from the end on the exhaust gas outflow side of the partition wall 12 along the direction opposite to the exhaust gas flow direction X so as not to reach the end on the exhaust gas inflow side of the partition wall 12.

From the viewpoint of balancing the exhaust gas purification performance and the cost, the mass (mass after drying and calcining) of the second catalyst layer 30 per unit volume of the portion of the substrate 10 provided with the second catalyst layer 30 is preferably 30 g/L or more and 250 g/L or less, more preferably 40 g/L or more and 200 g/L or less, and still more preferably 50 g/L or more and 150 g/L or less. The mass of the second catalyst layer 30 per unit volume of the portion of the substrate 10 provided with the second catalyst layer 30 is calculated from the formula: (Mass of second catalyst layer 30) / ((Volume of substrate 10) X (Average length L30 of second catalyst layer 30 / Length L10 of substrate 10)).

The above description with respect to "the mass of the first catalyst layer 20" is also applied to "the mass of second catalyst layer 30". Upon application, "the first catalyst layer 20" is replaced with "the second catalyst layer 30".

The above description with respect to the method of measuring the average length L20 of the first catalyst layer 20 is also applied to the method of measuring the average length L30 of the second catalyst layer 30. Upon application, "the first catalyst layer 20" and "the average length L20" are replaced with "the second catalyst layer 30" and "the average length L30", respectively.

In a case where information (composition, amount, and the like) about the raw materials used for production of the second catalyst layer 30 is known, the mass of the second catalyst layer 30 per unit volume of the portion of the substrate 10 provided with the second catalyst layer 30 is calculated from the information about the raw materials used for production of the second catalyst layer 30.

From the viewpoint of improving the exhaust gas purification performance, it is preferable that the second catalyst layer 30 contains Pd. When the first catalyst layer 20 is provided on the upside of the second catalyst layer 30, phosphorus poisoning of Pd contained in the second catalyst layer 30 can be suppressed.

Pd is contained in the second catalyst layer 30 in the form capable of functioning as a catalytically-active component, for example, in the form of a catalytically-active component containing Pd, such as metal Pd, an alloy containing Pd, a compound containing Pd (for example, an oxide of Pd), or the like. The catalytically-active component containing Pd is, for example, in the form of a particle.

From the viewpoint of balancing the exhaust gas purification performance and the cost, the content of Pd in the second catalyst layer 30, expressed as the content of Pd per unit volume of the portion of the substrate 10 provided with the second catalyst layer 30, is preferably 0.01 g/L or more and 10 g/L or less, more preferably 0.02 g/L or more and 7 g/L or less, and still more preferably 0.05 g/L or more and 5 g/L or less. The content of Pd is the content of Pd in terms of metal.

The content of Pd in the second catalyst layer 30 can be measured in the same manner as the molar amount of each metal element in the first catalyst layer 20.

From the viewpoint of improving the exhaust gas purification performance, it is preferable that the second catalyst layer 30 contains a carrier, and that at least part of the catalytically-active component is supported on the carrier. The meaning of the expression that "at least part of the catalytically-active component is supported on the carrier" and the method of confirming the fact that at least part of the catalytically-active component is supported on the carrier are the same as described above.

The carrier can be selected from inorganic oxide. The inorganic oxide is, for example, in the form of a particle. The inorganic oxide can be selected from the Al-based oxide, the Ce-based oxide, the Y-based oxide, and the like.

The second catalyst layer 30 may contain two or more types of carriers. For example, the second catalyst layer 30 may contain at least one Al-based oxide; and at least one Ce-based oxide and/or at least one Y-based oxide.

The second catalyst layer 30 may contain a binder. The binder can be selected from inorganic binders such as alumina, zirconia, titania, silica, ceria, yttria, and the like.

### <Production method of exhaust gas purification catalyst>

The exhaust gas purification catalyst 1 can be produced by forming the first catalyst layer 20 on the substrate 10 and then forming the second catalyst layer 30 on the upside of the first catalyst layer 20.

The second catalyst layer 30 can be formed by mixing a supply source of a noble metal element (for example, a Pd salt or the like), and (an)other component(s) (for example, an inorganic oxide(s), such as the Al-based oxide, the Ce-based oxide and/or the Y-based oxide, a binder, a solvent, and/or the like) to prepare a second slurry, coating the partition wall 12 of the substrate 10 with the second slurry, drying the resulting substrate, and calcining the resulting substrate.

The first catalyst layer 20 can be formed by mixing a supply source of a noble metal element (for example, a Rh salt or the like), and (an)other component(s) (for example, an inorganic oxide(s), such as the Al-based oxide, the Ce-based oxide and/or the Y-based oxide, a binder, a solvent, and/or the like) to prepare a first slurry, coating the second catalyst layer 30 with the first slurry, drying the resulting substrate, and calcining the resulting substrate.

Examples of the binder include metal oxide sols, such as alumina sol, zirconia sol, titania sol, silica sol, ceria sol, and yttria sol. Examples of the solvent include water and organic solvents.

The drying temperature is, for example, 60°C or more and 150°C or less, and the drying time is, for example, 0.1 hour or more and 1 hour or less. The calcining temperature is, for example, 300°C or more and 700°C or less, and the calcining time is, for example, 1 hour or more and 10 hours or less. Calcining may be performed, for example, in an air atmosphere.

### EXAMPLES

Embodiments of the present invention will be specifically described with reference to Examples, but the present invention is not limited to the Examples.

### <Examples 1 to 7 and Comparative Examples 1 to 2>

### (1) Formation of lower layer

To a vessel in which pure water was placed, a palladium nitrate solution, a Ce-Zr-based oxide, an alumina, and a binder were added successively, and thoroughly stirred and mixed to obtain a slurry for lower layer.

A stainless steel metal honeycomb substrate (diameter: 40 mm, length: 60 mm, cell density: 400 cells/square inch, volume: 75 mL) was immersed in the slurry for lower layer, excess slurry was removed, and the slurry for lower layer was applied onto the wall inside the substrate. The substrate to which the slurry for lower layer had been applied was dried at 80°C for 1 hour, and then calcined at 500°C for 4 hours to form a lower layer on the wall inside the substrate. The mass (mass after drying and calcining) of the lower layer per unit volume of the portion of the substrate provided with the lower layer was 110 g/L. The mass of Pd in terms of metal in the lower layer per unit volume of the portion of the substrate provided with the lower layer was 0.8 g/L.

### (2) Formation of upper layer

To a vessel in which pure water was placed, a rhodium nitrate solution; one or more selected from a Ce-Zr-based oxide containing one or more types of Ln other than Ce and a Y-Zr-based oxide containing one or more types of Ln other than Y; an alumina containing lanthanum oxide; and a binder were added successively, and thoroughly stirred and mixed to obtain a slurry for upper layer. The composition of the slurry for upper layer was adjusted so that the composition of an upper layer formed from the slurry for upper layer would be the composition shown in Table 1. In Table 1, "a" represents the mole percentage of the molar amount of Ce in the upper layer based on the total molar amount of all metal elements in the upper layer, "b" represents the mole percentage of the molar amount of Y in the upper layer based on the total molar amount of all metal elements in the upper layer, "c" represents the mole percentage of the molar amount of Rh in the upper layer based on the total molar amount of all metal elements in the upper layer.

The substrate on which the lower layer had been formed was immersed in the slurry for upper layer, excess slurry was removed, and the slurry for upper layer was applied onto the lower layer. The substrate to which the slurry for upper layer had been applied was dried at 80°C for 1 hour, and then calcined at 500°C for 4 hours to form an upper layer on the lower layer. Thus, an exhaust gas purification catalyst was obtained. The mass (mass after drying and calcining) of the upper layer per unit volume of the portion of the substrate provided with the upper layer was 60 g/L.

### (3) Aging test

The exhaust gas purification catalyst produced in (2) above was installed in an exhaust pipe, and a thermocouple was inserted in the center of the honeycomb substrate. This exhaust pipe was set in a gasoline engine (displacement: 2300 cc, fuel: gasoline with engine oil added), the engine speed/torque, etc. were adjusted so that the thermocouple temperature reached a predetermined temperature of 850°C to 1000°C, and the aging test was performed for 40 hours.

### (4) Evaluation of exhaust gas purification performance

After the aging test, the exhaust gas purification catalyst was incorporated into the muffler of a motorcycle, and CO and NOx emissions (mg/km) were measured under the following conditions. The results are shown in Table 1.
Vehicle used: single cylinder 110 cc motorcycle
Fuel: unleaded gasoline
Driving mode: WMTC
Measurement method: in accordance with ISO6460

### [Table 1]

**Table 1**

| | Upper layer | | | | | | | | | Emissions (mg/km) | |
|---|---|---|---|---|---|---|---|---|---|---|---|
| | Composition of upper layer (mol%) | | | | | | | "a"/"b" | "c"/"b" | | |
| | Ce | Zr | La | Nd | Y | Al | Rh | | | CO | NOx |
| Example 1 | 1.8 | 32.3 | 2.2 | 0.2 | 37.8 | 25.5 | 0.2 | 0.048 | 0.0053 | 720 | 84 |
| Example 2 | 3.1 | 45.6 | 1.3 | 4.0 | 19.5 | 26.3 | 0.2 | 0.159 | 0.0103 | 750 | 87 |
| Example 3 | 3.1 | 49.6 | 1.4 | 4.1 | 15.4 | 26.2 | 0.2 | 0.201 | 0.0130 | 710 | 88 |
| Example 4 | 3.2 | 45.8 | 1.2 | 13.2 | 9.0 | 27.4 | 0.2 | 0.356 | 0.0222 | 750 | 90 |
| Example 5 | 4.2 | 32.4 | 2.3 | 0.2 | 34.2 | 26.5 | 0.2 | 0.123 | 0.0058 | 720 | 81 |
| Example 6 | 1.3 | 16.8 | 1.7 | 0.2 | 11.9 | 67.9 | 0.2 | 0.109 | 0.0168 | 730 | 89 |
| Example 7 | 1.8 | 57.9 | 2.7 | 0.3 | 9.8 | 27.3 | 0.2 | 0.184 | 0.0104 | 740 | 81 |
| Comparative Example 1 | 3.2 | 49.4 | 1.3 | 11.4 | 7.2 | 27.3 | 0.2 | 0.444 | 0.0278 | 730 | 92 |
| Comparative Example 2 | 4.5 | 59.8 | 0.3 | 8.1 | 0.0 | 27.1 | 0.2 | - | - | 790 | 95 |

As shown in Table 1, the exhaust gas purification catalysts of Examples 1 to 7, which satisfy the condition that the value of "a"/"b" is 0.010 or more and 0.400 or less, have higher exhaust gas purification performance compared to the exhaust gas purification catalysts of Comparative Examples 1 to 2, which do not satisfy the above condition.

### DESCRIPTION OF REFERENCE SIGNS

1 ... exhaust gas purification catalyst
10 ... substrate
11 ... tubular member
12 ... partition wall
13 ... cell
20 ... first catalyst layer
30 ... second catalyst layer

## Claims

1. An exhaust gas purification catalyst, comprising a substrate and a first catalyst layer provided on the substrate,
wherein the first catalyst layer comprises Rh, Ce, and Y, and
wherein a value of "a"/"b", wherein "a" represents a mole percentage of a molar amount of Ce in the first catalyst layer based on a total molar amount of all metal elements in the first catalyst layer, and "b" represents a mole percentage of a molar amount of Y in the first catalyst layer based on the total molar amount of all metal elements in the first catalyst layer, is 0.010 or more and 0.400 or less.

2. The exhaust gas purification catalyst as claimed in claim 1, wherein the first catalyst layer further comprises Zr.

3. The exhaust gas purification catalyst as claimed in claim 1 or 2, wherein "b" is 11 mol% or more.

4. The exhaust gas purification catalyst as claimed in claim 1 or 2, wherein "b" is 15 mol% or more.

5. The exhaust gas purification catalyst as claimed in claim 1 or 2, wherein "b" is 19 mol% or more.

6. The exhaust gas purification catalyst as claimed in claim 1 or 2, wherein a value of "c"/"b", wherein "c" represents a mole percentage of a molar amount of Rh in the first catalyst layer based on the total molar amount of all metal elements in the first catalyst layer, is 0.0010 or more and 0.0270 or less.

7. The exhaust gas purification catalyst as claimed in claim 1, further comprising a second catalyst layer provided on the substrate.

8. The exhaust gas purification catalyst as claimed in claim 7, wherein the first catalyst layer is provided on an upside of the second catalyst layer.

9. The exhaust gas purification catalyst as claimed in claim 7 or 8, wherein the second catalyst layer comprises Pd.
